# EUROPÄISCHE PATENTANMELDUNG

(11) **EP 0 921 342 A2**
(43) Veröffentlichungstag der Anmeldung: **09.06.1999**
(21) Anmeldenummer: 98811122.5
(22) Anmeldetag: 10.11.1998
(51) Int. Cl.: F16L 23/036

(54) **Rohrverbindung**

(30) Priorität: 04.12.1997 CH 279697
(71) Anmelder: Georg Fischer Rohrleitungssysteme AG, CH-8201 Schaffhausen (CH)
(72) Erfinder: Brüggemann-Mortier, Klaus, 8200 Schaffhausen (CH)
(74) Vertreter: Weibel, Beat

(57) **Zusammenfassung**

Bei einer Rohrverbindung mit stirnseitig einander gegenüberstehenden Bunden (12,14) und zwischen den Stirnflächen der Bunde angeordneter Dichtung (34) sind die Bunde mit der zwischenliegenden Dichtung mittels einer lösbaren Spannvorrichtung (64) unter Bildung einer fluiddichten Verbindung gegeneinander verspannt. Die Aussenseiten der Bunde sind unter Ausbildung von Keilflächen (40,42) angeschrägt und die Spannvorrichtung (64) weist den Keilfächen der Bunde entsprechend angeschrägte Gegenflächen (60,62) auf. Die Spannvorrichtung übergreift beide Bunde über deren Umfang und die Keilflächen (40,42) liegen den Gegenflächen (60,62) unter Einfluss der in Umfangrichtung gespannten Spannvorrichtung kraftschlüssig an.

## Beschreibung

Die Erfindung betrifft eine Rohrverbindung mit stirnseitig einander gegenüberstehenden Bunden und zwischen den Stirnflächen der Bunde angeordneter Dichtung, wobei die Bunde mit der zwischenliegenden Dichtung mittels einer lösbaren Spannvorrichtung unter Bildung einer fluiddichten Verbindung gegeneinander verspannt sind.

Bei bekannten Rohrverbindungen mit Bundbuchsen und Kunststoffrohren, auf deren miteinander zu verbindenden Rohrenden jeweils eine ebenfalls aus Kunststoff gefertigte und üblicherweise mit dem Rohrende verklebte oder verschweisste Bundbuchse aufgesetzt ist, sind in den Stirnseiten der Bunde ringförmige Nuten zur Aufnahme eines oder mehrerer Dichtungsringe angeordnet. Eine fluiddichte und mechanisch stabile Verbindung von zwei aneinanderliegenden Bundbuchsen mit zwischengeordneter Dichtung erfolgt beispielsweise über Losflansche, die miteinander verschraubt werden und dadurch den für die fluiddichte Verbindung erforderlichen Anpressdruck der Bundbuchsendichtflächen auf die zwischenliegende Dichtung erzeugen.

Durch unsachgemässes Anziehen der Schrauben oder auch bei hohen Innendrücken in den Rohren werden die Bundbuchsen im Bereich der Kontaktfläche zum Flansch und im Übergangsradius zwischen bund und Rohr bzw. Buchse hohen örtlichen Belastungen ausgesetzt. Die dabei auftretenden hohen Biegemomente erzeugen eine Kerbwirkung, die zunächst zu Anrissen und bei fortgesetzter Belastung schliesslich zum Bruch der Bundbuchse führen können.

Der Erfindung liegt daher die Aufgabe zugrunde, die Spannvorrichtung einer Rohrverbindung der eingangs genannten Art so auszugestalten, dass in den Spannelementen keine extremen Biegemomente auftreten können.

Zur erfindungsgemässen Lösung der Aufgabe führt, dass die Aussenseiten der Bunde unter Ausbildung von Keilflächen angeschrägt sind und die Spannvorrichtung den Keilflächen der Bunde entsprechend angeschrägte Gegenflächen aufweist, wobei die Spannvorrichtung beide Bunde über ihren Umfang übergreift und die Keilflächen den Gegenflächen unter dem Einfluss der in Umfangrichtung gespannten Spannvorrichtung kraftschlüssig anliegen.

Zum Aufbringen der Spannkraft kann beispielsweise ein Spannband mittig um den Umfang der Spannvorrichtung angeordnet sein. Bevorzugt sind jedoch zum Aufbringen der Spannkraft zwei Spannbänder symmetrisch zur Trennebene der Rohrverbindung um den Umfang der Spannvorrichtung angeordnet. Die durch die über die keilförmigen Kontaktflächen zwischen Bunden und Spannvorrichtung zu übertragenden Axialkräfte induzierten Biegemomente der Spannvorrichtung bewirken eine Aufweitung der Spannvorrichtung sowohl in axialer Richtung als auch in radialer Richtung. Die Aufweitung in radialer Richtung wird durch die beidseits der Spannvorrichtung angeordneten, in Umfangrichtung wirkenden Spannbänder behindert.

Die Spannbänder können auch in die Spannvorrichtung integriert sein, d.h. die Spannvorrichtung wirkt direkt als Spannband und wird als solches direkt gespannt.

Eine besonders zweckmässige Spannvorrichtung weist über den Umfang verteilt angeordnete Spannsegmente auf. Diese Segmente können beispielsweise Glieder einer Spannkette sein.

Als Dichtung können beispielsweise in Nuten in den Stirnflächen der Bunde eingesetzte O-Ringe verwendet werden. Selbstverständlich kann auch eine sich über die gesamte Breite der Stirnflächen erstreckende Flachdichtung eingesetzt werden.

Bei einer bevorzugten Dichtungsanordnung sind in den Stirnflächen der Bunde ringförmige Nuten zur Aufnahme eines Dichtungsringes angeordnet, wobei der durch die Nuten begrenzte Aufnahmeraum für den Dichtungsring unter Bildung eines umlaufenden Oeffnungsspaltes unmittelbar an die dem Medium zugewandte Innenseite der Bunde grenzt, so dass der den Oeffnungsspalt verschliessende Teil des Dichtungsringes mit der Innenseite der Bunde im wesentlichen fluchtet.

Bei Betätigung der Spannvorrichtung wird der Dichtungsring, z.B. ein O-Ring, verformt, so dass eine totraumfreie Abdichtung der Rohrverbindung entsteht.

Bevorzugt wird eine der Nuten zur Aufnahme des Dichtungsringes in wenigstens einer der Stirnflächen der Bunde so ausgestaltet, dass der Dichtungsring während der Montage der Rohrverbindung in einem der Bunde gehalten wird.

Bei einer zweckmässigen Ausgestaltung der erfindungsgemässen Rohrverbindung weisen die Bunde im Bereich ihrer Stirnflächen zumindest teilweise ineinandergreifende Elemente auf. Beim Zusammenbau der Rohrverbindung ergibt sich so eine selbsttätige Zentrierung der Bunde, was zusammen mit der oben beschriebenen Klemmung des O-Ringes in einem der Bunde den Montagevorgang wesentlich vereinfacht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Längsschnitt durch eine offene Rohrverbindung;
- Fig. 2: einen Längsschnitt durch die geschlossene Rohrverbindung von Fig. 1 mit eingelegtem Dichtungsring;
- Fig. 3: einen Längsschnitt durch die Rohrverbindung von Fig. 2 mit aufgesetzter Spannvorrichtung;
- Fig. 4: eine Schrägsicht auf die Rohrverbindung von Fig. 3.

Bei einer Rohrverbindung 10 sind zwei Rohrteile 16, 18 über stirnseitig angeformte Bunde 12, 14 lösbar miteinander verbunden. Die Rohrteile 16, 18 können Rohre oder Buchsen von auf die Enden der miteinander zu verbindenden Rohre aufgesetzten Bundbuchsen bzw. Vorschweissbunden sein.

Die Stirnfläche 20 des Bundes 12 ist an dessen Aussenseite mit einem von der Stirnfläche abragenden Vorsprung 24 ausgestattet, der bei geschlossener Rohrverbindung in eine an der Stirnfläche 22 des Bundes 14 entsprechend gegengeformte Ausnehmung 26 eingreift. Zwei in die Stirnflächen 20, 22 eingeformte ringförmige Nuten 28, 30 mit querschnittlich etwa kreisrunder Kontur bilden in geschlossenem Zustand einen Aufnahmeraum 32 für eine O-Ring-Dichtung 34.

Die Nuten 28, 30 sind im Bereich der Innenseite 38 der Rohrteile 16, 18 so angeordnet, dass sie im geschlossenen Zustand der Rohrverbindung 10 einen Oeffnungsspalt 36 bilden, der bei geschlossener Rohrverbindung vom O-Ring 34 verschlossen ist.

Durch die fluchtende Anordnung des den Oeffnungsspalt 36 verschliessenden Teils des O-Ringes 34 mit der Innenseite 38 der Bunde 12, 14 entsteht eine totraumfreie Abdichtung der Rohrvorbindung 10.

Die Nut 30 im Bund 14 ist gegenüber der Nut 28 im Bund 12 stärker ausgenommen, so dass der in die Nut 30 eingelegte O-Ring 34 während der Montage der Rohrverbindung 10 im Bund 14 gehalten wird.

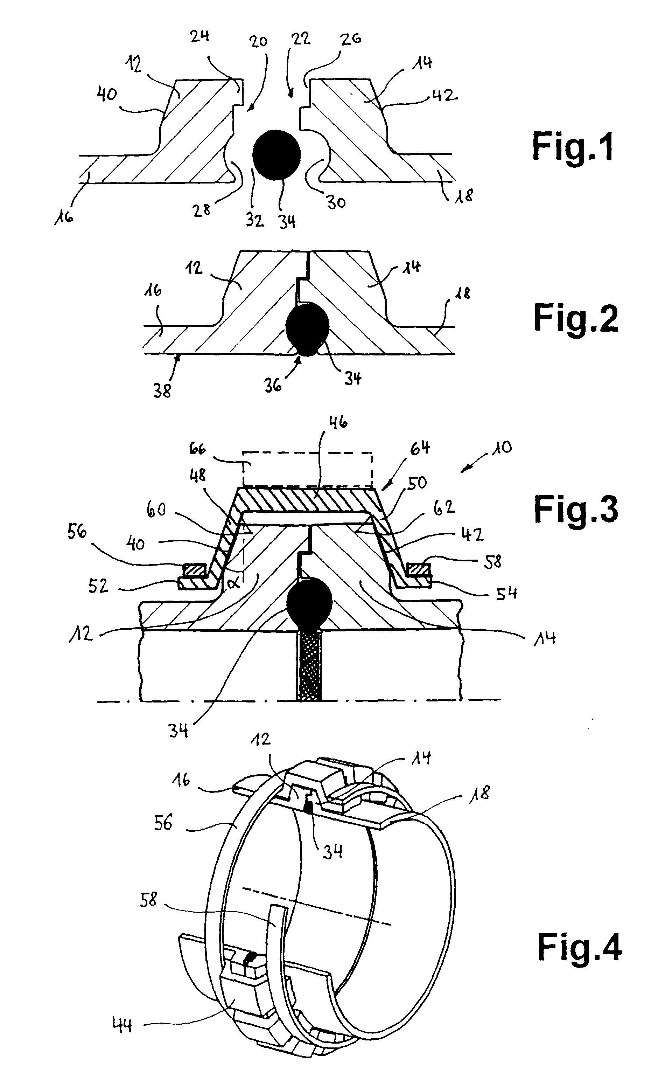

Wie in Fig. 3 und 4 gezeigt wird die Rohrverbindung 10 mittels einer lösbaren Spannvorrichtung 64 fixiert. Die Spannvorrichtung 64 umfasst einzelne, zu einer Spannkette zusammengefügte Spannsegmente 44. Jedes Spannsegment 44 weist einen Bodenteil 46 mit von diesem abragenden Schenkelteilen 48, 50 auf, deren freie Enden als Auflagestreifen 52, 54 für Spannbänder 56, 58 nach aussen abragen. Die Innenflächen 60, 62 der Schenkelteile 48, 50 sind vom Bodenteil 46 ausgehend um einen Winkel a nach aussen geneigt angeordnet. Die Bunde 12, 14 sind an deren Aussenseite mit dem gleichen Neigungswinkel a unter Bildung von Keilflächen 40, 42 angeschrägt, so dass die Innenflächen 60, 62 der Schenkelteile 48, 50 den Keilflächen 40, 42 bei aufgesetzter Spannvorrichtung 64 und bei gespannten Spannbändern 56, 58 reib- bzw. kraftschlüssig anliegen.

In Fig. 3 ist gestrichelt eine andere Möglichkeit einer Spannvorrichtung angedeutet, bei der ein zentral um den Umfang der Spannvorrichtung 64 gelegtes Spannband 66 anstelle oder zusätzlich zu den seitlichen Spannbändern 56, 58 angeordnet ist.

Anstelle eines Dichtungsringes mit speziell angepassten Nuten in den Stirnflächen der Bunde kann selbstverständlich jede andere Dichtung, beispielsweise eine aus mehreren Dichtungsringen bestehende Dichtung oder auch eine sich über die gesamte Breite der Stirnflächen erstreckende Flachdichtung eingesetzt werden.

## Patentansprüche

1. Rohrverbindung mit stirnseitig einander gegenüberstehenden Bunden (12,14) und zwischen den Stirnflächen (20,22) der Bunde angeordneter Dichtung (34), wobei die Bunde mit der zwischenliegenden Dichtung mittels einer lösbaren Spannvorrichtung (64) unter Bildung einer fluiddichten Verbindung gegeneinander verspannt sind,
dadurch gekennzeichnet, dass
die Aussenseiten der Bunde (12,14) unter Ausbildung von Keilflächen (40,42) angeschrägt sind und die Spannvorrichtung (64) den Keilflächen der Bunde entsprechend angeschrägte Gegenflächen (60,62) aufweist, wobei die Spannvorrichtung beide Bunde über ihren Umfang übergreift und die Keilflächen den Gegenflächen unter dem Einfluss der in Umfangrichtung gespannten Spannvorrichtung kraftschlüssig anliegen.

2. Rohrverbindung nach Anspruch 1, dadurch gekennzeichnet, dass zum Aufbringen der Spannkraft ein Spannband (66) mittig um den Umfang der Spannvorrichtung (64) angeordnet ist.

3. Rohrverbindung nach Anspruch 1 oder 2, dadurch gekennzeichnet, dass zum Aufbringen der Spannkraft zwei Spannbänder (56,58) symmetrisch zur Trennebene der Rohrverbindung um den Umfang der Spannvorrichtung (64) angeordnet sind.

4. Rohrverbindung nach Anspruch 2 oder 3, dadurch gekennzeichnet, dass die Spannbänder (66,56,58) in die Spannvorrichtung (64) integriert sind.

5. Rohrverbindung nach einem der Ansprüche 2 bis 4, dadurch gekennzeichnet, dass die Spannvorrichtung (64) einteilig ausgebildet ist.

6. Rohrverbindung nach einem der Ansprüche 2 bis 4, dadurch gekennzeichnet, dass die Spannvorrichtung (64) über den Umfang verteilt angeordnete Spannsegmente (44) aufweist.

7. Rohrverbindung nach Anspruch 6, dadurch gekennzeichnet, dass die Spannsegmente (44) Glieder einer Spannkette sind.

8. Rohrverbindung nach einem der Ansprüche 1 bis 7, dadurch gekennzeichnet, dass in den Stirnflächen (20,22) der Bunde (12,14) ringförmige Nuten (28,30) zur Aufnahme eines Dichtungsringes (34) angeordnet sind, wobei der durch die Nuten (28,30) begrenzte Aufnahmeraum (32) für den Dichtungsring (34) unter Bildung eines umlaufenden Oeffnungsspaltes (36) unmittelbar an die dem Medium zugewandte Innenseite (38) der Bunde (12,14) grenzt, so dass der den Oeffnungsspalt verschliessende Teil des Dichtungsringes mit der Innenseite der Bunde im wesentlichen fluchtet.

9. Rohrverbindung nach Anspruch 8, dadurch gekennzeichnet, dass eine der Nuten (30) zur Aufnahme des Dichtungsringes (34) in wenigstens einer der Stirnflächen (22) der Bunde so ausgestaltet ist, dass der Dichtungsring (34) während der Montage der Rohrverbindung in einem der Bunde (14) gehalten wird.

10. Rohrverbindung nach Anspruch 8 oder 9, dadurch gekennzeichnet, dass der Dichtungsring (34) ein O-Ring ist.

11. Rohrverbindung nach einem der Ansprüche 8 bis 10, dadurch gekennzeichnet, dass die Bunde (12,14) im Bereich ihrer Stirnflächen (20,22) zur Zentrierung zumindest teilweise ineinandergreifende Elemente (24,26) aufweisen.
